# EUROPÄISCHE PATENTSCHRIFT

(11) **EP 1 212 530 B1**
(45) Veröffentlichungstag und Bekanntmachung des Hinweises auf die Patenterteilung: **27.09.2006**
(21) Anmeldenummer: 00954614.4
(22) Anmeldetag: 09.08.2000
(51) Int. Cl.: F02M 35/10

(54) **ANSAUGEINRICHTUNG FÜR EINE BRENNKRAFTMASCHINE**
INTAKE DEVICE FOR AN INTERNAL COMBUSTION ENGINE
SYSTEME D'ADMISSION POUR MOTEUR A COMBUSTION INTERNE

(30) Priorität: 18.09.1999 DE 19944855
(43) Veröffentlichungstag der Anmeldung: 12.06.2002
(73) Patentinhaber: Mann + Hummel GmbH, 71638 Ludwigsburg (DE)
(72) Erfinder: SCHERMULY, Thomas, D-74538 Rosengarten (DE); LANG, Jürgen, D-70806 Kornwestheim (DE)
(74) Vertreter: Voth, Gerhard
(86) Internationale Anmeldenummer: PCT/EP2000/007735
(87) Internationale Veröffentlichungsnummer: WO 2001/021953

(56) Entgegenhaltungen:
- EP-A- 0 355 960
- DE-A- 19 728 600
- GB-A- 2 279 035
- US-A- 5 575 249
- US-A- 5 642 697

## Beschreibung

Die Erfindung betrifft ein Baukastensystem nach den Merkmalen des unabhängigen Anspruchs 1 sowie ein Verfahren zur Herstellung einer Ansaugeinrichtung.

Aus der GB 2 295 215 ist eine Kunststoffhohlraumstruktur bekannt, diese besteht aus wenigstens zwei Kunststoffbauteilen in welche ein weiteres Kunststoffbauteil eingefügt wird. Die beiden Kunststoffbauteile werden über eine Schweißverbindung miteinander verbunden. Der Gegenstand dieser Patentanmeldung hat zum Ziel unterschiedliche Einlegeteile zwischen die beiden Kunststoffteile einzufügen. Aufgrund der vordefinierten Struktur der beiden Kunststoffteile ist jedoch die Variabilität der Einlegeteile begrenzt.

Aus der EP 0 355 960 A2 ist ein Ansaugsystem für eine Brennkraftmaschine bekannt. Dieses weist zwei Teile auf, die miteinander verschweißt werden. Außerdem ist ein Saugrohr an einem der beiden Teile eingesteckt.
Es ist femer aus der WO00/22293 ein Luftführungssystem für eine Verbrennungskraftmaschine bekannt, welches modulartig aufgebaut ist, wobei in das Saugmodul ein Umgehungskanal integriert ist. Dieser Umgehungskanal dient gleichzeitig zur akustischen Abschirmung des Sammelraumes.
Aus der GB 2 279 035 ist ein Ansaugsystem bekannt, das aus zwei Halbschalen besteht, wobei die beiden Halbschalen miteinander verschweißt werden. Durch die Verschweißung der beiden Halbschalen werden Ansaugkanäle zur Führung der Ansaugluft der Verbrennungskraftmaschine geschaffen.

Der Erfindung liegt daher die Aufgabe zugrunde, eine Ansaugeinrichtung zu schaffen, welche hinsichtlich der Länge und des Querschnittes des Ansaugrohrs eine hohe Variabilität aufweist und geringe Herstellkosten verursacht.

Diese Aufgabe wird durch die Merkmale dem Ansprüche 1 und 5 gelöst.

Die Erfindung betrifft auch ein Verfahren zur Herstellung einer Ansaugeinrichtung aus 3 Kunststoffgehäuseteilen, wobei die Kunststoffgehäuseteile jeweils Dichtflächen aufweisen und diese Dichtflächen nacheinander in Kontakt gebracht und über das Aufbringen einer Verbindungskraft miteinander verschweißt werden. Bei der Herstellung einer solchen Ansaugeinrichtung sind lediglich 2 Montageschritte nötig, um das komplette Bauteil aus den 3 Teilen aufzubauen.

Die Erfindung ermöglicht eine Vielzahl von Variationen hinsichtlich der Verwendung unterschiedlicher Bauteile, so besteht die Möglichkeit, das erste Bauteil hinsichtlich der Struktur und dem Aufbau vorzudefinieren und das mittlere und dritte Bauteil unterschiedlich zu gestalten, dass heißt durch eine Variation den Ansaugquerschnitt als auch die Ansaugrohrlänge zu ändern. Selbstverständlich besteht auch die Möglichkeit, das erste und das zweite Bauteil unterschiedlich auszugestalten und das dritte Bauteil vorzudefinieren. Der Vorteil der Erfindung liegt darin, daß bei höchstmöglichster Variabilität der Ansaugeinrichtung, möglichst wenige Werkzeuge für die Herstellung benötigt werden.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand von Ausführungsbeispielen näher erläutert. Es zeigt:
- Figur 1: eine perspektivische Ansicht einer Ansaugeinrichtung.
- Figur 2: eine Draufsicht auf eine Ansaugeinrichtung.
- Figur 3: einen Querschnitt durch die in Figur gezeigte Ansaugeinrichtung.
- Figur 4: einen Querschnitt durch eine verkürzte Ansaugeinrichtung.

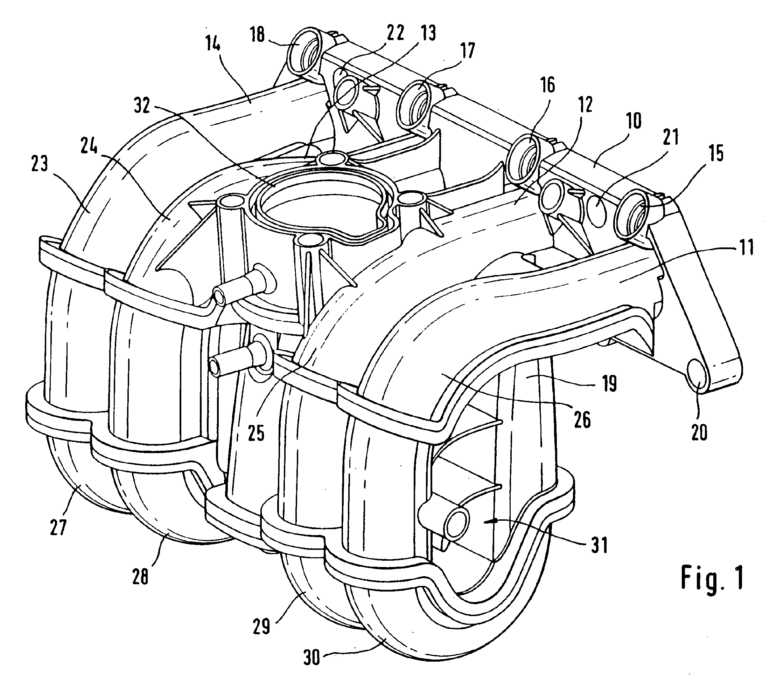

Die perspektivisch dargestellte Ansaugeinrichtung gemäß Figur 1 weist einen Befestigungsflansch 10 auf, in welchen Ansaugrohre 11, 12, 13, 14 münden. Oberhalb der Saugrohre sind Aufnahmen 15, 16, 17, 18 für ein Einspritzventil vorgesehen. Zwischen Der wesentliche Vorteil der Erfindung liegt darin, daß die Ansaugeinrichtung aus drei Bauteilen besteht. Während das erste und das dritte Bauteil in Ihrer Struktur und ihrem Aufbau vordefiniert sind, kann das zweite, daß heißt das mittlere Bauteil durch unterschiedliche Ausgestaltungen, daß heißt durch eine Variation dazu genutzt werden, sowohl den Ansaugquerschnitt als auch die Ansaugrohrlänge variabel zu gestalten.

Da lediglich das mittlere Bauteil unterschiedlich ausgestattet ist, besteht keine Notwendigkeit, die Spritzgießwerkzeuge des ersten und des zweiten Bauteils anzupassen. Es können deshalb lediglich aufgrund der Variation des Werkzeugs des zweiten Bauteils eine Vielzahl von Ansaugeinrichtungen unterschiedlicher Saugrohrlänge und unterschiedlicher Saugrohrquerschnitte gebildet werden.

Gemäß einer Ausgestaltung der Erfindung ist der Ansaugquerschnitt des ersten Bauteils an den Ansaugquerschnitt des zweiten Bauteils angepaßt. Dies kann durch ein Wechselteil im Spritzgießwerkzeug des ersten Bauteils erfolgen. Dieses Wechselteil ermöglicht unterschiedliche Querschnittsübergänge.

Das zweite Bauteil bildet 2 Abschnitte des Ansaugrohres. Durch Variation der Höhe des zweiten Teils werden diese Abschnitte verlängert oder verkürzt, so daß mit dem zweiten Bauteil eine variable Ansaugrohrlänge gestaltet werden kann.

Eine weitere Ausgestaltung der Erfindung liegt darin, daß das zweite Bauteil einen Hohlraum umschließt, welcher als Unterdruckspeicher oder als Aufnahme für mechanische oder elektrische Komponenten angewendet werden kann. Dieser Hohlraum kann durch geeignete Deckel oder Abschlußelemente druckdicht verschlossen werden.

Es ist weiterhin gemäß einer Ausgestaltung der Erfindung möglich, an dem ersten Bauteil ein Filtergehäuse anzuordnen. Dabei dient das erste Bauteil als Träger und als Grundkörper oder Boden. Durch diese Kombination von Filter und Ansaugeinrichtung wird eine sehr kompakte Einrichtung zur Versorgung einer Brennkraftmaschine mit Ansaugluft geschaffen.

In den Ansaugrohren 12 und 13 befindet sich ein Anschluß 32 zur Zuführung der Ansaugluft. Die Ansaugluft gelangt über diesen Anschluß in einen gemeinsamen Sammelraum 19, der im vorderen Teil sichtbar ist. Der Befestigungsflansch 10 ist mit Bohrungen 20, 21, 22 sowie weiteren, hier nicht sichtbaren Bohrungen ausgestattet. Mit geeigneten Schraubverbindungen wird der Befestigungsflansch an dem Zylinderkopf einer Brennkraftmaschine befestigt. Der Befestigungsflansch 10 und die Oberschalen 23, 24, 25, 26 bilden das erste Bauteil der Ansaugeinrichtung. Demgegenüber liegen die Unterschalen 27, 28, 29, 30 der Ansaugeinrichtung, welche das dritte Bauteil bilden. Zwischen den Oberschalen und den Unterschalen befindet sich das mittlere Bauteil 31.

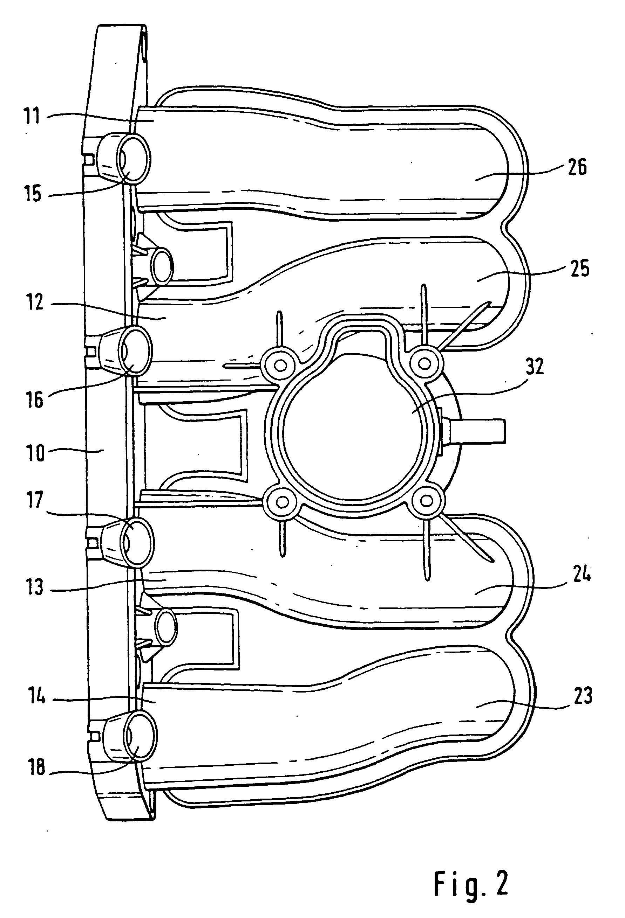

In der Draufsicht gemäß Figur 2 sind die Oberschalen 23-26 und der Befestigungsflansch 10 zu erkennen sowie die Aufnahmen 15-18 für die Einspritzdüsen. Auf dem Anschluß 32 wird ein Luftfiltergehäuse befestigt. Dieses Luftfiltergehäuse besteht aus einem Rohluftraum und einem Reinluftraum und zwischen diesen angeordnet ein Filterelement. Das Luftfiltergehäuse kann mit geeigneten Befestigungsmitteln unmittelbar auf die Oberschalen angepaßt und dort fixiert werden.

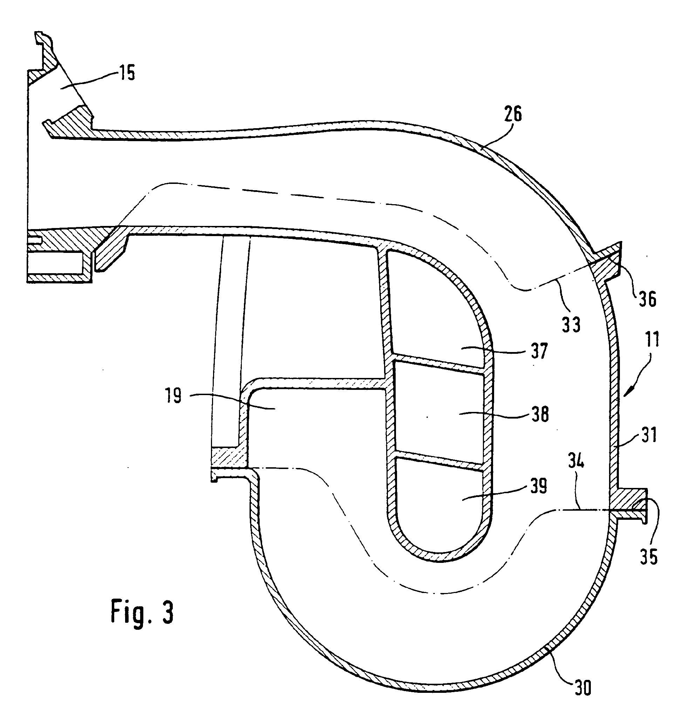

Figur 3 zeigt einen Querschnitt durch das Ansaugrohr 11, welches in Figur 1 und Figur 2 dargestellt ist. Es besteht aus der Oberschale 26, der Unterschale 30 und dem mittleren Bauteil 31. Die Verbindungslinie zwischen den 3 Bauteilen ist strichpunktiert dargestellt. Sowohl an der oberen Verbindungslinie 33 als auch an der unteren Verbindungslinie 34 erfolgt über das Reibschweißen eine druckdichte Verbindung. Hierzu sind die umlaufenden Kontaktflächen 35, 36 entsprechend ausgestattet. In dem mittleren Bauteil 31 befinden sich 3 Hohlräume 37, 38, 39. Dieser Bauraum wird für das Ansaugsystem nicht benötigt.

Hier kann beispielsweise ein Druckspeicher oder es können weitere mechanische oder elektrische Komponenten untergebracht werden. Die Verbindungslinien 33, 34 zwischen den Bauteilen sind schweißtechnisch günstig gestaltet, d.h. sie weisen ausgehend von einer Schweißebene, die senkrecht zu der Anpreßrichtung einer Schweißvorrichtung verläuft, eine maximale Winkelabweichung von 450 auf. Damit ist gewährleistet, daß bei dem Verschweißen der Teile eine gleichmäßige Verbindung an den Kontaktflächen 35, 36 erfolgt.

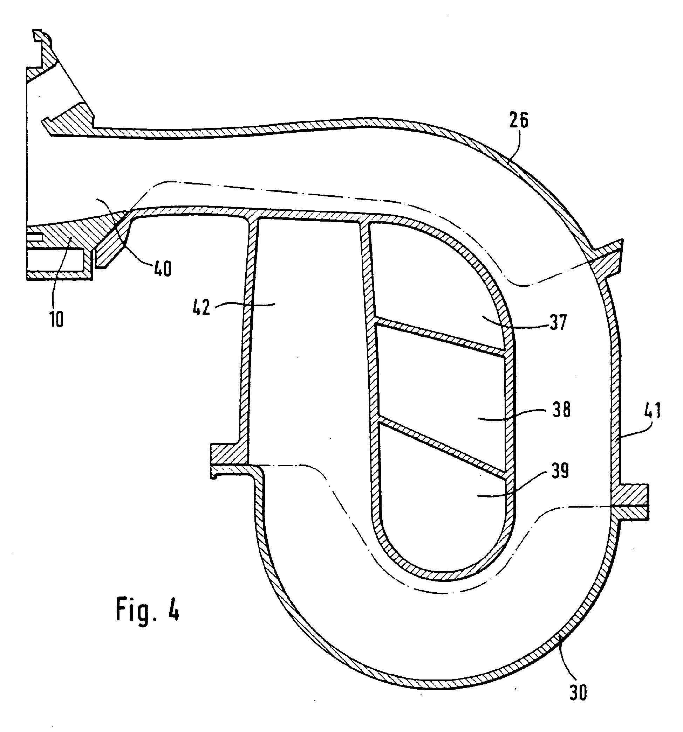

Figur 4 zeigt eine Variante einer Ansaugeinrichtung, bei welcher die Unterschale mit der Unterschale 30 aus Figur 3 identisch ist. Die Oberschale ist im wesentlichen ebenfalls mit der Oberschale 26 der Figur 3 identisch. Lediglich am Befestigungsflansch 10 ist eine Verjüngung des Ansaugquerschnitts 40 festzustellen. Diese Verjüngung dient zur Anpassung der Oberschale an ein geändertes mittleres Bauteil. Das mittlere Bauteil weist größere innere Hohlräume 37, 38, 39 auf und bildet damit einen geringeren Ansaugquerschnitt.

Gleichzeitig ist das mittlere Bauteil 41 derart gestaltet, daß die Ansauglänge vergrößert wird. Während in Figur 3 der Sammelraum 19 unmittelbar über der Unterschale 30 angeordnet ist, befindet sich der Sammelraum 42 der Figur 4 unterhalb der Oberschale 26, so daß eine größere Ansauglänge zustande kommt. Der Vergleich der beiden Figuren 3 und 4 zeigt sehr deutlich, daß durch die Variation des mittleren Bauteils eine Anpassung der Ansaugeinrichtung an verschiedene Brennkraftmaschinen möglich ist. Die Anpassung ist sowohl hinsichtlich des Ansaugquerschnittes als auch der Ansauglänge variabel. Selbstverständlich besteht die Möglichkeit, weitere Varianten, wie z.B. eine Vergrößerung des Ansaugquerschnittes und eine Vergrößerung der Ansauglänge oder eine Verkleinerung des Ansaugquerschnittes und gleichzeitig eine Verkleinerung der Ansauglänge, mit der entsprechenden Anpassung des mittleren Bauteils zu verwirklichen.

## Patentansprüche

1. Baukastensystem für die Ansaugeinrichtung einer Brennkraftmaschine, bestehend aus einem Befestigungsflansch (10) zum Befestigen an einem Zylinderkopf einer Brennkraftmaschine, mehreren Ansaugrohren (11, 14), welche in einen gemeinsamen Sammelraum münden, wobei das Baukastensystem folgende Elemente aufweist; einen Befestigungsflansch (10), der ein erstes Bauteil (23, 24, 25, 26) bildet, in welchem die Ansaugrohre enden und ein zweites Bauteil (31) vorgesehen ist, in welches sich die Ansaugrohre erstrecken und ein drittes Bauteil (27, 28, 29, 30), welches das zweite Bauteil abschließt und die Form der Ansaugrohre bildet, wobei die Bauteile derart miteinander verbunden sind, daß an dem ersten Bauteil (23-26) das zweite Bauteil (31) formschlüssig befestigt ist und an dem zweiten Bauteil (31) das dritte Bauteil (27-30) formschlüssig befestigt ist, **dadurch gekennzeichnet, daß** als zweites Bauteil mindestens zwei hinsichtlich des Ansaugquerschnittes als auch der Ansauglänge unterschiedliche Ausgestaltungen des zweiten Bauteils beim Baukastensystem vorhanden sind.

2. Ansaugeinrichtung nach Anspruch 1, **dadurch gekennzeichnet, daß** der Ansaugquerschnitt des ersten Bauteils (23-26) an den Ansaugquerschnitt des zweiten Bauteils (31) angepaßt ist.

3. Ansaugeinrichtung nach einem der vorherigen Ansprüche, **dadurch gekennzeichnet, daß** das zweite Bauteil (31) einen Hohlraum (37-39) umschließt, welcher als Unterdruckspeicher oder als Aufnahme für mechanische oder elektrische Komponenten angewendet wird.

4. Ansaugeinrichtung nach einem der vorherigen Ansprüche, **dadurch gekennzeichnet, daß** an dem ersten Bauteil ein Filtergehäuse angeordnet ist.

5. Verfahren zur Herstellung einer Ansaugeinrichtung aus drei Kunststoffgehäuseeinzelteilen mit korrespondierenden Dichtflächen zur Erzeugung eines variablen, wählbaren Schwingrohrquerschnittes, wobei das Verfahren folgende Schritte umfaßt:
- Schaffung eines ersten Kunststoffgehäuseteils (23-26) mit einer ersten Dichtfläche (33),
- Schaffung eines zweiten Kunststoffgehäuseteils mit einer zweiten und einer dritten Dichtfläche,
- Schaffung eines dritten Kunststoffgehäuseteils (27-30) mit einer Dichtfläche (34),
- Anbringung des ersten Kunststoffgehäuseteils in einem ersten Werkzeug oder einer Lehre, welches das erste Kunststoffgehäuseteil in der Umgebung der ersten Dichtfläche (33) unterstützt,
- Anbringung des zweiten Kunststoffgehäuseteils in einem zweiten Werkzeug oder einer Lehre, welches das zweite Kunststoffgehäuseteil in der Umgebung der zweiten Dichtfläche unterstützt,
- Ausrichten der Teile mit den korrespondierenden Dichtflächen, so daß die korrespondierenden Dichtflächen miteinander in Kontakt kommen,
- Aufbringen einer Verbindungskraft auf die gesamten Dichtflächen (33) und Erzeugung einer Reibbewegung zum Verschweißen der Teile
- Anbringung des dritten Kunststoffgehäuseteils in einem weiteren Werkzeug oder einer Lehre, welches das dritte Kunststoffgehäuseteil in der Umgebung der dritten Dichtfläche (34) unterstützt,
- Ausrichten der Teile mit den korrespondierenden Dichtflächen (34), so daß die Dichtflächen miteinander in Kontakt kommen,
- Aufbringung einer Verbindungskraft auf die dritten Dichtflächen (34) und Erzeugung einer Reibbewegung zum Verschweißen der Teile,
**dadurch gekennzeichnet, daß** mindestens zwei unterschiedliche Ausgestaltungen aufweisende und wahlweise verwendbare zweite Kunststoffgehäuseteile an dem ersten Kunststoffgehäuseteil adaptierbar sind und diese zur Anpassung der Ansaugeinrichtung an verschiedene Brennkraftmaschinen dienen.

## Claims

1. Modular system for the intake device of an internal combustion engine, the said intake device comprising a mounting flange (10) for securement to a cylinder head of an internal combustion engine and a plurality of intake ducts (11, 14) that open out into a common collecting chamber, wherein the modular system includes the following elements: there is provided a mounting flange (10), which forms a first component (23, 24, 25, 26), in which the intake ducts terminate, a second component (31) into which the intake ducts extend and a third component (27, 28, 29, 30), which closes off the second component and forms the shape of the intake ducts, wherein the components are interconnected in such a manner that the second component (31) is secured in a positive locking manner to the first component (23 - 26) and the third component (27 - 30) is secured in a positive locking manner to the second component (31), **characterised in that** as the second component in the modular system there are at least two developments of the second component with a different intake cross-section and a different intake length.

2. Intake device according to claim 1, **characterised in that** the intake cross-section of the first component (23 - 26) is adapted to the intake cross-section of the second components (31).

3. Intake device according to one of the preceding claims, **characterised in that** the second component (31) encloses a hollow space (37 - 39), which is used as negative pressure storage means or as receiving means for mechanical or electrical components.

4. Intake device according to one of the preceding claims, **characterised in that** a filter housing is disposed at the first component.

5. Method for the production of an intake device from three individual housing parts made from plastics material with corresponding sealing surfaces to create a variable, optional ram pipe cross-section, wherein the method includes the following steps:
- creating a first plastics material housing part (23 - 26) with a first sealing surface (33)
- creating a second plastics material housing part with a second and a third sealing surface,
- creating a third plastics material housing part (27 - 30) with a sealing surface (34),
- mounting the first plastics material housing part in a first tool or a mould, which supports the first plastics material housing part in the vicinity of the first sealing surface (33),
- mounting the second plastics material housing part in a second tool or a mould, which supports the second plastics material housing part in the vicinity of the second sealing surface,
- aligning the parts with the corresponding sealing surfaces such that the corresponding sealing surfaces come into contact with one another,
- applying a connecting force to all the sealing surfaces (33) and creating a frictional movement for the welding of the parts
- mounting the third plastics material housing part in a further tool or a mould, which supports the third plastics material housing part in the vicinity of the third sealing surface (34),
- aligning the parts with the corresponding sealing surfaces (34) such that the sealing surfaces come into contact with one another,
- applying a connecting force to the third sealing surfaces (34) and creating a frictional movement for the welding of the parts,
**characterised in that** at least two different second plastics material housing parts that have different developments and are optionally useable are adaptable to the first plastics material housing part and the said at least two different second plastics material housing parts are used to adapt the intake device to different internal combustion engines.

## Revendications

1. Système modulaire pour le dispositif d'admission d'un moteur à combustion interne, comprenant une bride de fixation (10) pour la fixation à une culasse d'un moteur à combustion interne et plusieurs tubes d'admission (11, 14) qui débouchent dans une chambre collectrice commune, le système modulaire présentant les composants suivants : une bride de fixation (10) qui forme un premier élément (23, 24, 25, 26) dans lequel débouchent les tubes d'admission, un deuxième élément (31) dans lequel s'étendent les tubes d'admission, et un troisième élément (27, 28, 29, 30) qui termine le deuxième élément et définit la forme des tubes d'admission, les éléments étant reliés les uns aux autres de sorte que le deuxième élément (31) soit fixé par complémentarité de formes au premier élément (23-26) et que le troisième élément (27-30) soit fixé par complémentarité de forme au deuxième élément (31),
**caractérisé en ce que**
le deuxième élément présente au moins deux configurations possibles dans le système modulaire, différentes en section transversale d'admission et en longueur d'admission.

2. Dispositif d'admission selon la revendication 1,
**caractérisé en ce que**
la section transversale d'admission du premier élément (23-26) est adaptée à celle du deuxième élément (31).

3. Dispositif d'admission selon l'une quelconque des revendications précédentes,
**caractérisé en ce que**
le deuxième élément (31) entoure un espace creux (37-39) utilisé comme accumulateur de dépression ou logement pour des composants mécaniques ou électriques.

4. Dispositif d'admission selon l'une quelconque des revendications précédentes,
**caractérisé en ce que**
le premier élément comporte un boîtier de filtre.

5. Procédé de fabrication d'un dispositif d'admission composé de trois éléments de boîtier en matière plastique avec des surfaces d'étanchéité correspondantes pour générer une section transversale de tube d'admission variable quelconque, le procédé comprenant les étapes suivantes :
- réalisation d'un premier élément de boîtier en matière plastique (23-26) avec une première surface d'étanchéité (33),
- réalisation d'un deuxième élément de boîtier en matière plastique avec une deuxième et une troisième surface d'étanchéité,
- réalisation d'un troisième élément de boîtier en matière plastique (27-30) avec une surface d'étanchéité (34),
- insertion de premier élément de boîtier en matière plastique dans un premier outil ou dans un gabarit qui soutient le premier élément de boîtier en matière plastique dans l'environnement de la première surface d'étanchéité (33),
- insertion du deuxième élément de boîtier en matière plastique dans un deuxième outil ou dans un gabarit qui soutient le deuxième élément de boîtier en matière plastique dans l'environnement de la deuxième surface d'étanchéité,
- alignement des éléments avec les surfaces d'étanchéité correspondantes pour mettre en contact les unes avec les autres les surfaces d'étanchéité correspondantes,
- application d'une force de jonction sur la totalité des surfaces d'étanchéité (33) et génération d'un mouvement de friction pour le soudage des éléments,
- insertion du troisième élément de boîtier en matière plastique dans un autre outil ou gabarit qui soutient le troisième élément de boîtier en matière plastique dans l'environnement de la troisième surface d'étanchéité (34),
- alignement des éléments avec les surfaces d'étanchéité (34) correspondantes pour mettre les surfaces d'étanchéité en contact les unes avec les autres,
- application d'une force de jonction sur les troisièmes surfaces d'étanchéité (34) et génération d'un mouvement de friction pour le soudage des éléments,
**caractérisé en ce qu'**
au moins deux deuxièmes éléments de boîtier en matière plastique présentant des configurations différentes et pouvant être utilisés au choix peuvent être adaptés au premier élément de boîtier en matière plastique et servent à l'adaptation du dispositif d'admission à différents moteurs à combustion interne.
